# EUROPÄISCHE PATENTSCHRIFT

(11) **EP 4 296 215 B1**
(45) Veröffentlichungstag und Bekanntmachung des Hinweises auf die Patenterteilung: **12.03.2025**
(21) Anmeldenummer: 23179772.1
(22) Anmeldetag: 16.06.2023
(51) Int. Cl.: B66F 9/06, B66F 9/075, B66F 17/00, G01S 17/931, G05D 1/43, G05D 1/242, G05D 1/667, G05D 105/28, G05D 107/70, G05D 109/10

(54) **AUTONOM FAHRENDES TRANSPORTSYSTEM ZUM TRANSPORT VON PALETTEN UND/ODER GITTERBOXEN UND VERFAHREN ZUM BETRIEB EINES SOLCHEN AUTONOM FAHRENDEN TRANSPORTSYSTEMS**
AUTONOMOUSLY TRAVELLING TRANSPORT SYSTEM FOR TRANSPORTING PALLETS AND/OR GRID BOXES AND METHOD FOR OPERATING SUCH AUTONOMOUSLY TRAVELLING TRANSPORT SYSTEM
SYSTÈME DE TRANSPORT À DÉPLACEMENT AUTONOME POUR LE TRANSPORT DE PALETTES ET/OU DE BOÎTES EN TREILLIS ET PROCÉDÉ DE FONCTIONNEMENT D'UN TEL SYSTÈME DE TRANSPORT À DÉPLACEMENT AUTONOME

(30) Priorität: 24.06.2022 DE 102022115797
(43) Veröffentlichungstag der Anmeldung: 27.12.2023
(73) Patentinhaber: SICK AG, 79183 Waldkirch (DE)
(72) Erfinder: BÖHLER, Frank, 79206 Breisach-Gündlingen (DE)
(74) Vertreter: Manitz Finsterwald Patent- und Rechtsanwaltspartnerschaft mbB

(56) Entgegenhaltungen:
- WO-A1-2021/069674
- CN-A- 113 703 460
- DE-A1- 102019 215 180
- DE-A1- 102020 102 513
- US-A1- 2020 101 971

## Beschreibung

Die Erfindung betrifft ein autonom fahrendes Transportsystem, insbesondere einen autonom fahrenden Stapler, insbesondere in Form eines Gabelstaplers zum Transport von Paletten und/oder Gitterboxen und ein Verfahren zum Betrieb eines solchen autonom fahrenden Transportsystems.

Paletten mit Gütern bzw. Gitterboxen mit Gütern werden in der Produktion bzw. Logistik platzsparend nebeneinander aufgereiht. Hierzu wird die Palette bzw. die Gitterbox in einen freien Platz (freie Abstellfläche) geschoben. Neuerdings erfolgt dies auch automatisiert mittels autonom fahrenden Fahrzeugen (AGV - Automated Guided Vehicle). Um sicherzustellen, dass keine Person verletzt wird, die sich auf dem freien Platz befindet, werden die Paletten bzw. Gitterboxen derart nebeneinander abgestellt, dass das noch ein Fluchtweg für die Person vorhanden ist. Häufig wird neben einer abgestellten Palette bzw. Gitterbox ein voller Platz freigelassen. Dieser Lagerplatz kann dann nicht weiter verwendet werden.

Die DE 10 2019 215 180 A1 beschreibt ein autonom fahrendes Fahrzeug zum

Transport von Lasten nach dem Oberbegriff des Anspruchs 1. Zum Abladen der Last auf einer freien Abstellfläche fährt das Fahrzeug rückwärts, wobei eine Sensoreinrichtung die freie Abstellfläche auf Hindernisse untersucht. Löst ein Warnfeld beim Rückwärtsfahren in die freie Abstellfläche aus, so schaltet die Sensoreinrichtung auf ein schmaleres Schutzfeld um. Durch dieses schmalere Schutzfeld können eingeschlossene Personen erkannt werden.

Die CN 113 703 460 A zeigt ein autonom fahrendes Transportsystem. Das Transportsystem empfängt einen entsprechenden Entladebefehl und fährt dann zu einem Zielgebiet. Das Transportsystem umfasst eine Hinderniserkennungseinrichtung, die den Fahrweg permanent nach Hindernissen überwacht. Wird kein Hindernis in Zielgebiete detektiert, so wird ein Abstellbetriebsmodus eingenommen und das Transportsystem fährt in das Zielgebiet hinein.

Die DE 10 2020 102 513 A1 beschreibt ein fahrerloses Transportsystem zum Transportieren von Werkstücken. Der Überwachungsbereich zum Detektieren von Hindernissen ist dabei in seiner Größe anpassbar.

WO 2021/069674 A1 beschreibt ein autonomes Fahrzeug mit einer Sensoreinrichtung zur Erkennung von Hindernissen und zur Navigation. Das Fahrzeug verwendet eine Vielzahl von Sensoren, darunter LiDAR und Kameras, um die Umgebung zu überwachen und eine sichere Bewegung zu gewährleisten. Die Steuerungseinheit des Fahrzeugs kann die Daten der Sensoren verarbeiten, um den optimalen Pfad zu berechnen und Hindernisse zu vermeiden.

Die US 2020 /101971 A1 beschreibt ein System zur Kollisionsvermeidung eines autonom fahrenden Transportsystems. Über ein Hinderniserkennungssystem können Objekte detektiert werden. Eine Steuereinheit legt Grenzbereiche fest um zu ermitteln, ob sich das detektierte Objekt innerhalb eines solchen Grenzbereichs befindet. Ist dies der Fall, so wird ein Alarm ausgegeben.

Es ist daher die Aufgabe der hier vorliegenden Erfindung ein autonom fahrendes Transportsystem zum Transport von Paletten und/oder Gitterboxen zu schaffen, durch das der vorhandene Lagerplatz möglichst effizient genutzt werden kann.

Die Aufgabe wird durch das autonom fahrende Transportsystem des unabhängigen Anspruchs 1 gelöst. Anspruch 10 beschreibt ein Verfahren zum Betrieb eines solchen autonom fahrenden Transportsystems. Die Ansprüche 2 bis 9 geben erfindungsgemäße Weiterbildungen des autonom fahrenden Transportsystems wieder.

Das erfindungsgemäße autonom fahrende Transportsystem dient insbesondere zum Transport von Paletten und/oder Gitterboxen. Das Transportsystem umfasst eine Aufnahmevorrichtung zur Aufnahme einer solchen Palette und/oder Gitterbox. Das Transportsystem umfasst weiterhin eine Antriebseinheit und eine Steuervorrichtung. Die Steuervorrichtung weist eine Datenverarbeitungseinheit und eine Hinderniserkennungseinrichtung mit einer ersten Sensoreinheit auf. Die Hinderniserkennungseinrichtung ist über die erste Sensoreinheit dazu ausgebildet, um ein Überwachungsfeld zu erzeugen, um mit dem Überwachungsfeld eine freie Abstellfläche für die Palette und/oder die Gitterbox zwischen anderen Paletten und/oder Gitterboxen auf Hindernisse hin zu untersuchen. Die Steuervorrichtung ist dazu ausgebildet, um die Antriebseinheit derart anzusteuern, dass das Transportsystem (bei einem fehlenden Hindernis) einen Abstellbetriebsmodus einnimmt und die Palette und/oder die Gitterbox zum Abstellen in die freie Abstellfläche fährt. In einer ersten Alternative ist die Hinderniserkennungseinrichtung im Abstellbetriebsmodus dazu ausgebildet, um während des Befahrens der freien Abstellfläche, zumindest bis zum Abstellen der Palette und/oder der Gitterbox auf der freien Abstellfläche, das Überwachungsfeld zu deaktivieren oder kein Hinderniserkennungssignal auszugeben. Dies erfolgt durch entsprechende Ansteuerung der ersten Sensoreinheit. In einer anderen Alternative ist die Datenverarbeitungseinheit im Abstellbetriebsmodus dazu ausgebildet, um während des Befahrens der freien Abstellfläche, zumindest bis zum Abstellen der Palette und/oder der Gitterbox auf der freien Abstellfläche, ein Hinderniserkennungssignal der Hinderniserkennungseinrichtung zu ignorieren.

Bei dem autonom fahrenden Transportsystem handelt es sich insbesondere um ein selbstfahrendes und selbstnavigierendes Fahrzeug. Das Transportsystem ist bevorzugt zum automatischen Aufnehmen und Abladen von Lasten (d.h. z.B. der hierin genannten Paletten und Gitterboxen) ausgebildet. Das Transportsystem kann z.B. ein Flurförderzeug oder ein Stapler sein, insbesondere in Form eines Gabelstaplers.

Es ist besonders vorteilhaft, dass das erfindungsgemäße autonom fahrende Transportsystem zuerst mittels eines Überwachungsfeldes detektiert, ob sich Hindernisse auf einer freien Abstellfläche für die Palette und/oder die Gitterbox befinden. Befinden sich keine Hindernisse (zum Beispiel Personen oder Gegenstände) auf der freien Abstellfläche, so wechselt das Transportsystem in den Abstellbetriebsmodus. In diesem Abstellbetriebsmodus kann beispielsweise das Überwachungsfeld deaktiviert werden. Dabei kann die gefahrene Distanz überwacht werden, so dass sichergestellt wird, dass das Transportsystem nicht über die freigemessene Fläche hinausfährt. Alternativ wird trotz aktiviertem Überwachungsfeld kein Hinderniserkennungssignal ausgegeben bzw. ein solches Hinderniserkennungssignal wird ignoriert und die Fahrt wird fortgesetzt. Diese ist problemlos möglich, weil vor dem Einfahren in die freie Abstellfläche diese bereits auf Hindernisse hin untersucht wurde. Es sind daher zwei Maßnahmen, die eine effizientere Nutzung des Lagerplatzes erlauben. Einerseits wird die freie Abstellfläche mit einem Überwachungsfeld unmittelbar vor Befahren der freien Abstellfläche gescannt und andererseits wird dafür Sorge getragen, dass keine Sicherheitsreaktion der Hinderniserkennungseinrichtung ausgelöst wird, was den Abstellvorgang unterbrechen würde und die Paletten und/oder Gitterboxen daher sehr eng zueinander abgestellt werden können. Der Wortlaut "unmittelbar" bedeutet insbesondere, dass die freie Abstellfläche weniger als 10 Sekunden, 5 Sekunden oder weniger als 3 Sekunden vor Befahren auf Hindernisse untersucht wird, um dadurch sicherzustellen, dass sich nicht noch eine Person hinein bewegt. Weiter vorzugsweise können andere Sensoreinheiten, die ebenfalls dazu ausgebildet sind, um Hindernisse zu detektieren und die nicht zur Überwachung der freien Abstellfläche dienen, aktiviert bleiben, um dadurch Personen detektieren zu können, die sich dem autonom fahrenden Transportsystem nähern und gegebenenfalls versuchen seitlich an dem autonom fahrenden Transportsystem vorbei in die freie Abstellfläche zu gelangen. Bei einer solchen Detektion hält das autonom fahrende Transportsystem vorzugsweise an oder verlässt die freie Abstellfläche wieder.

In einer vorteilhaften Ausführungsform ist die Steuervorrichtung dazu ausgebildet, um die Antriebseinheit derart anzusteuern, dass das Transportsystem im Abstellbetriebsmodus nur auf dem freigemessenen Bereich der Abstellfläche fährt. Dadurch werden Kollisionen auch dann verhindert, wenn die Hinderniserkennungseinrichtung deaktiviert ist.

In einer weiteren vorteilhaften Ausführungsform handelt es sich bei der ersten Sensoreinheit um einen optischen Sensor, einen akustischen Sensor (z.B. Ultraschall) oder einen elektromagnetischen Sensor (z.B. Radar). Bevorzugt handelt sich bei dem optischen Sensor um einen ToF-Sensor (Time-of-Flight) und/oder einen Laserscanner. Dadurch kann die freie Abstellfläche mit einer hohen Auflösung auf Hindernisse hin untersucht werden.

In einer weiteren vorteilhaften Ausführungsform umfasst die Aufnahmevorrichtung Gabeln. In diesem Fall handelt es sich bei dem Transportsystem um einen Gabelstapler.

In einer weiteren vorteilhaften Ausführungsform ist die erste Sensoreinheit am Ende zumindest einer Gabel angeordnet. Dadurch kann die freie Abstellfläche besonders einfach auf Hindernisse hin untersucht werden. Die Gabel könnte entsprechend hohl sein, um Verbindungskabel zwischen der ersten Sensoreinheit und der Datenverarbeitungseinheit aufzunehmen.

In einer weiteren vorteilhaften Ausführungsform ist die erste Sensoreinheit an einem unteren Bereich des Transportsystems angeordnet. Insbesondere ist die erste Sensoreinheit auf der Seite des Transportsystems angeordnet, auf welcher sich auch die Aufnahmevorrichtung befindet. Die Steuervorrichtung ist dazu ausgebildet, um die Aufnahmevorrichtung derart anzusteuern, dass diese die Palette und/oder die Gitterbox anhebt, sodass sich das Überwachungsfeld der ersten Sensoreinheit unterhalb der Palette und/oder der Gitterbox hindurch in Richtung der freien Abstellfläche erstreckt, um diese dadurch auf Hindernisse hin zu untersuchen. Dieses Anheben kann bevorzugt lediglich vor dem Befahren der freien Abstellfläche erfolgen. Zum Befahren der freien Abstellfläche könnte die Palette und/oder die Gitterbox bereits wieder abgesenkt werden (z.B. bei der Alternative mit dem deaktivierten Überwachungsfeld).

In einer weiteren vorteilhaften Ausführungsform umfasst die Hinderniserkennungseinrichtung eine zweite Sensoreinheit. Die erste Sensoreinheit ist rückseitig am Transportsystem und die zweite Sensoreinheit frontseitig am Transportsystem angeordnet. Dadurch kann sowohl in einer Vorwärtsfahrt (hier wird die zweite Sensoreinheit verwendet) als auch bei einer Rückwärtsfahrt (hier wird die erste Sensoreinheit verwendet) ein Hindernis in der jeweiligen Fahrtrichtung erkannt werden.

In einer weiteren vorteilhaften Ausführungsform ist die Antriebseinheit eine elektrische Antriebseinheit. Die Steuervorrichtung ist im Abstellbetriebsmodus dazu ausgebildet, um die Stromaufnahme der Antriebseinheit zu überwachen. Für den Fall, dass die Stromaufnahme der Antriebseinheit einen Schwellenwert überschreitet, ist die Steuervorrichtung dazu ausgebildet, um die Antriebseinheit derart anzusteuern, dass diese das Transportsystem stoppt oder aus der freien Abstellfläche herausfährt. Die Stromaufnahme kann ein Indiz für eine mögliche Kollision sein. Grundsätzlich wäre es denkbar, dass die Steuervorrichtung den Schwellwert in Abhängigkeit eines Gewichts der aufgenommenen Palette und/oder Gitterbox anpasst. Für schwerere Paletten und/oder Gitterboxen ist der Schwellwert höher als für leichtere Paletten und/oder Gitterboxen. Dadurch wird ein zusätzlicher Sicherheitsfaktor eingeführt.

In einer weiteren vorteilhaften Ausführungsform ist die Steuervorrichtung dazu ausgebildet, um die Geschwindigkeit, mit welcher das autonom fahrende Transportsystem die freie Abstellfläche befährt, gegenüber einer Geschwindigkeit, mit welcher das autonom fahrende Transportsystem ansonsten bewegt wird, zu reduzieren. Vorzugsweise ist die Geschwindigkeit, mit welcher das autonom fahrende Transportsystem die freie Abstellfläche befährt kleiner als 1 m/s, 50 cm/s oder kleiner als 30 cm/s.

Das erfindungsgemäße Verfahren dient zum Betrieb eines autonom fahrenden Transportsystems zum Transport von Paletten und/oder Gitterboxen. In einem ersten Verfahrensschritt wird ein Überwachungsfeld erzeugt. Dies erfolgt bevorzugt durch eine erste Sensoreinheit einer Hinderniserkennungseinrichtung. Mit diesem Überwachungsfeld wird eine freie Abstellfläche für eine abzustellende Palette und/oder Gitterbox (die das Transportsystem mit sich führt) zwischen anderen

Paletten und/oder Gitterboxen auf Hindernisse (Personen und/oder Gegenstände) hin untersucht. In einem zweiten Verfahrensschritt wird die Antriebseinheit derart angesteuert, dass das Transportsystem bei einem fehlenden Hindernis (das Überwachungsfeld detektiert kein Hindernis in der freien Abstellfläche) einen Abstellbetriebsmodus einnimmt und die Palette und/oder die Gitterbox zum Abstellen in die freie Abstellfläche fährt. Dieses Ansteuern erfolgt vorzugsweise durch die Steuervorrichtung. In einem dritten Verfahrensschritt wird das Überwachungsfeld deaktiviert. Alternativ wird unterbunden, dass ein Hinderniserkennungssignal ausgegeben (insbesondere an die Datenverarbeitungseinheit übergeben) wird. Alternativ wird ein solches Hinderniserkennungssignal (durch die Datenverarbeitungseinheit) ignoriert, solange sich das Transportsystem im Abstellbetriebsmodus befindet.

Nachfolgend wird die Erfindung rein beispielhaft unter Bezugnahme auf die Zeichnungen beschrieben. Es zeigen:
- Figur 1A:: ein Ausführungsbeispiel des erfindungsgemäßen autonom fahrenden Transportsystems, hier in Form eines Staplers, der ein Überwachungsfeld zur Detektion von Hindernissen auf einer freien Abstellfläche zwischen mehreren Paletten erzeugt;
- Figur 1B:: zeigt den Stapler aus Figur 1A, der die freie Abstellfläche zum Abstellen einer aufgenommenen Palette befährt und dabei sein Überwachungsfeld deaktiviert;
- Figur 1C:: zeigt den Stapler aus Figur 1A, der die freie Abstellfläche zum Abstellen einer aufgenommenen Palette befährt und dabei sein Überwachungsfeld fortlaufend in der Größe anpasst;
- Figur 2A:: ein Ausführungsbeispiel des erfindungsgemäßen autonom fahrenden Staplers, wobei die Hinderniserkennungseinrichtung eine erste Sensoreinheit und eine zweite Sensoreinheit umfasst;
- Figur 2B:: ein Ausführungsbeispiel des erfindungsgemäßen autonom fahrenden Staplers, wobei die erste Sensoreinheit ein Überwachungsfeld erzeugt, welches unter der aufgenommenen Palette ausgesendet wird;
- Figur 2C:: ein Ausführungsbeispiel des erfindungsgemäßen autonom fahrenden Staplers, wobei die erste Sensoreinheit in bzw. an einer Gabelspitze angeordnet ist; und
- Figur 3:: ein Verfahren zum Betrieb des autonom fahrenden Staplers.

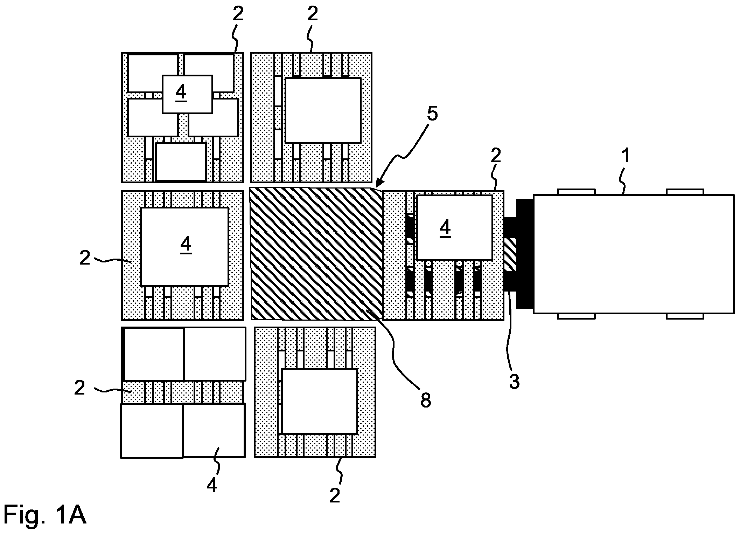

Figur 1A zeigt ein Ausführungsbeispiel eines erfindungsgemäßen autonom fahrenden Transportsystems, hier in Form eines Staplers 1. Der Stapler 1 dient vorzugsweise zum Transport von Paletten 2 und/oder Gitterboxen. Um die Paletten 2 und/oder Gitterboxen aufzunehmen umfasst der Stapler 1 vorzugsweise zwei Gabeln 3. Auf den Paletten 2 sind in diesem Fall verschiedene Güter 4 angeordnet. In Figur 1A sind die Paletten 2 in zwei Spalten angeordnet. Eine erste Spalte umfasst drei Paletten 2 und eine zweite Spalte umfasst zwei Paletten 2. In der zweiten Spalte ist daher eine freie Abstellfläche 5 vorhanden. Diese freie Abstellfläche 5 ist von drei Seiten durch andere Paletten 2 begrenzt. Wird die freie Abstellfläche 5 nun zum Abstellen einer weiteren Palette 2 verwendet, so gibt es beim Einfahren dieser weiteren Palette 2 kein Fluchtweg für eine etwaige Person, die sich auf der freien Abstellfläche 5 befindet, um beispielsweise Güter 4 auf einer der benachbarten Palette 2 zu sortieren.

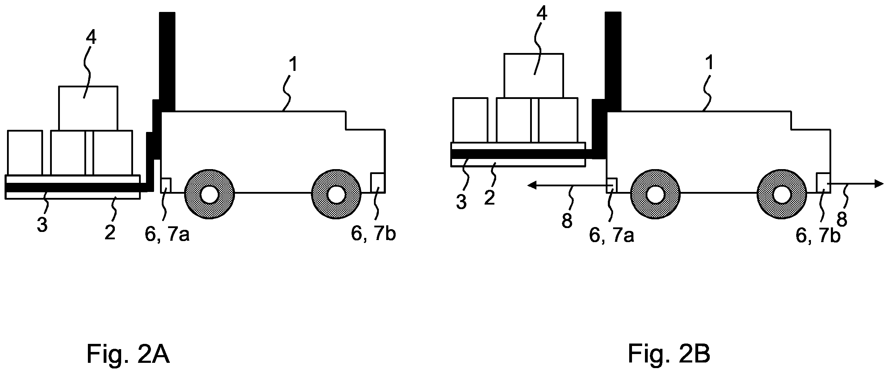

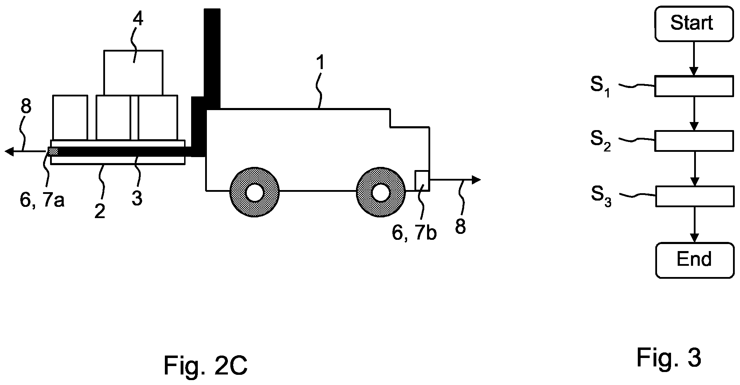

Der Stapler 1 umfasst eine Antriebseinheit (nicht dargestellt). Vorzugsweise handelt es sich um eine elektrische Antriebseinheit, die beispielsweise induktiv (z.B. über zumindest eine Leiterbahn im Boden) oder über einen Akku mit elektrischer Energie versorgt wird. Der Stapler 1 umfasst außerdem eine Steuervorrichtung (nicht dargestellt), die eine Datenverarbeitungseinheit (nicht dargestellt) und eine Hinderniserkennungseinrichtung 6 aufweist. Die Hinderniserkennungseinrichtung 6 umfasst eine erste Sensoreinheit 7a und eine zweite Sensoreinheit 7b (siehe Figuren 2A, 2B, 2C). Die erste Sensoreinheit 7a ist rückseitig am Stapler 1, also dort, wo die Gabeln 3 befestigt sind, angeordnet. Die zweite Sensoreinheit 7b ist frontseitig am Stapler 1 angeordnet. Der Stapler 1 ist dazu ausgebildet, um sich nach einer aufgenommenen Palette 2 und/oder Gitterbox mit der Frontseite in Fahrtrichtung zum Ziel zu bewegen. Dies hat den Vorteil, dass die Palette 2 und/oder die Gitterbox die zweite Sensoreinheit 7b der Hinderniserkennungseinrichtung 6, die Hindernisse vor dem Stapler 1 erfasst, nicht verdeckt.

Die erste Sensoreinheit 7a und/oder die zweite Sensoreinheit 7b umfasst zumindest einen optischen Sensor, zumindest einen akustischen Sensor oder zumindest einen elektromagnetischen Sensor. Es wäre denkbar, dass die erste Sensoreinheit 7a und die zweite Sensoreinheit 7b verschiedene Arten von Sensoren umfassen. Es wäre auch denkbar, dass die erste Sensoreinheit 7a und die zweite Sensoreinheit 7b eine unterschiedliche Anzahl von Sensoren umfassen.

Der optische Sensor ist bevorzugt ein ToF-Sensor und/oder ein Laserscanner. Über Lichtlaufzeiten zwischen einem ausgesendeten Lichtimpuls und einem empfangenen Lichtimpuls, der an einem Hindernis reflektiert wurde, können Hindernisse in der Umgebung des Staplers 1 ermittelt werden.

Die erste Sensoreinheit 7a ist dazu ausgebildet, um ein Überwachungsfeld 8 zu erzeugen. Die zweite Sensoreinheit 7b ist ebenfalls dazu ausgebildet, um ein Überwachungsfeld 8 zu erzeugen. Die Überwachungsfelder 8 der ersten Sensoreinheit 7a und der zweiten Sensoreinheit 7b können gleich groß oder verschieden groß sein.

In Figur 1A ist die erste Sensoreinheit 7a dazu ausgebildet, um mit ihrem Überwachungsfeld 8 die freie Abstellfläche 5 für die abzustellende Palette 2 und/oder Gitterbox zwischen anderen Paletten 2 auf Hindernisse hin zu untersuchen. Das Überwachungsfeld 8 ist in diesem Fall schraffiert dargestellt. Die Form des Überwachungsfeldes 8 ist nur beispielhaft gewählt und soll lediglich verdeutlichen, dass das Überwachungsfeld 8 auf die freie Abstellfläche 5 gerichtet ist. Das Überwachungsfeld 8 erstreckt sich vorzugsweise in Bodennähe. Dies bedeutet, dass ein Abstand zwischen dem Boden und dem Überwachungsfeld 8 vorzugsweise kleiner ist als 80 cm, 50 cm, 40 cm oder kleiner ist als 20 cm. Vorzugsweise verläuft das Überwachungsfeld 8 in etwa parallel zum Boden. Der Wortlaut "in etwa" beinhaltet vorzugsweise auch Abweichungen von weniger als 10° oder weniger als 5°. Es wäre auch denkbar, dass das Überwachungsfeld 8 unter einem Winkel auf den Boden der freien Abstellfläche 5 trifft.

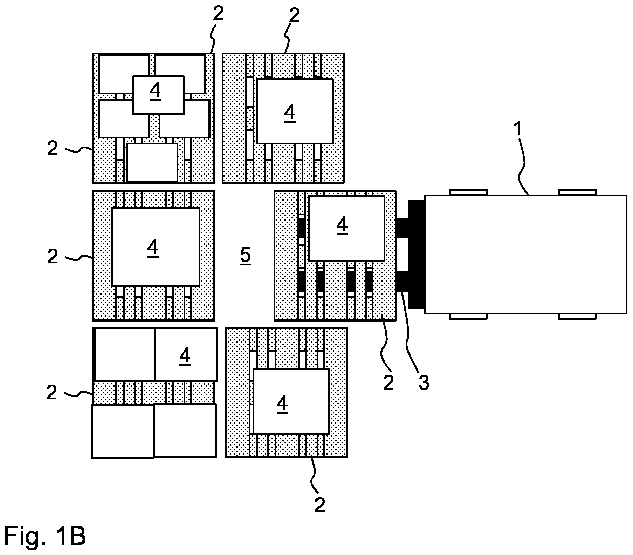

Die Steuervorrichtung des Staplers 1 ist dazu ausgebildet, um die Antriebseinheit derart anzusteuern, dass der Stapler 1 bei einem fehlenden Hindernis einen Abstellbetriebsmodus einnimmt. Im Abstellbetriebsmodus fährt der Stapler 1 die Palette 2 und/oder die Gitterbox zum Abstellen in die freie Abstellfläche 5. Im Abstellbetriebsmodus ist die Hinderniserkennungseinrichtung 6 dazu ausgebildet, um während des Befahrens der freien Abstellfläche 5, zumindest bis zum Abstellen der Palette 2 und/oder der Gitterbox auf der freien Abstellfläche 5, das Überwachungsfeld 8 zu deaktivieren. Dies kann beispielsweise dadurch erfolgen, dass die Energieversorgung zur ersten Sensoreinheit 7a unterbrochen bzw. ein entsprechendes Steuersignal an die erste Sensoreinheit 7a angelegt wird. Dieser Sachverhalt ist in Figur 1B dargestellt.

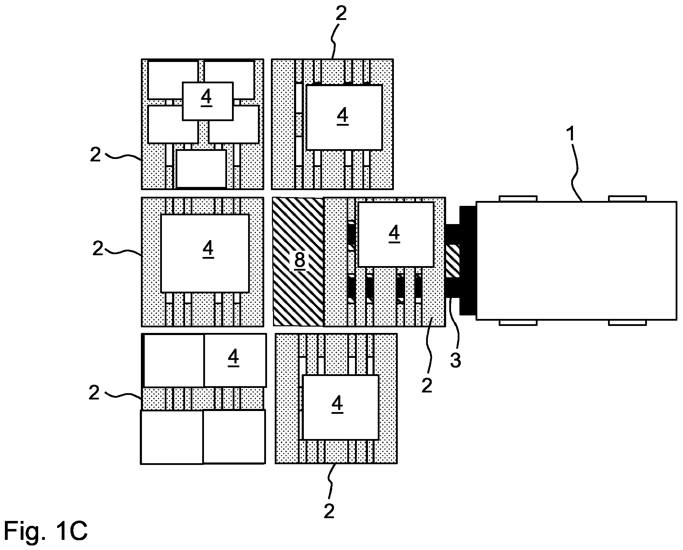

In einem alternativen nicht zur beanspruchten Erfindung gehörendem Beispiel ist die Hinderniserkennungseinrichtung 6 dazu ausgebildet, um während des Befahrens der freien Abstellfläche 5, zumindest bis zum Abstellen der Palette 2 und/oder der Gitterbox auf der freien Abstellfläche 5, das Überwachungsfeld 8 auf die frei Abstellfläche 5 zu begrenzen. Dieser Sachverhalt ist in Figur 1C dargestellt. In diesem Fall ist die Datenverarbeitungseinheit dazu ausgebildet, um die erste Sensoreinheit 7a derart anzusteuern, dass diese ihr Überwachungsfeld 8 auf den noch nicht befahrenen Teil der freien Abstellfläche 5 begrenzt. Der Stapler 1 umfasst hierzu vorzugsweise eine Gebereinheit. Die Gebereinheit ist dazu ausgebildet, um im Abstellbetriebsmodus fortlaufend eine gefahrene Strecke zu ermitteln, wobei die Hinderniserkennungseinrichtung 6 dazu ausgebildet ist, um anhand der ermittelten Strecke das Überwachungsfeld 8 (der ersten Sensoreinheit 7a) fortlaufend zu begrenzen, also zu verkleinern. Das "Begrenzen" erfolgt dahingehend, dass benachbarte Paletten 2 und/oder Gitterboxen kein Hinderniserkennungssignal erzeugen. Die Gebereinheit ist vorzugsweise als Drehgeber ausgebildet und an einer Antriebswelle der Antriebseinheit angeordnet. Die Hinderniserkennungseinrichtung 6 ist dazu ausgebildet, um das Überwachungsfeld 8 (der ersten Sensoreinheit 7a) durch Verstellen des Abstrahlwinkels der ersten Sensoreinheit 7a zu begrenzen. Dies könnte beispielsweise durch ein Verkippen der ersten Sensoreinheit 7a oder durch Drehen eines Spiegels innerhalb der ersten Sensoreinheit 7a erfolgen. Je weiter der Stapler 1 in die freie Abstellfläche 5 fährt, desto größer könnte der Winkel zwischen dem Überwachungsfeld 8 und dem Boden sein. Das Begrenzen könnte auch dadurch erfolgen, dass die Hinderniserkennungseinrichtung 6 oder die Datenverarbeitungseinheit dazu ausgebildet ist, um das Überwachungsfeld 8 durch Ausblenden von bestimmten Bereichen, die über die freie Abstellfläche 5 hinausgehen, zu begrenzen. Dies könnte durch Ignorieren von reflektierten Lichtimpulsen erfolgen, die nach einer bestimmten Zeit eintreffen. In diesem Fall könnten Lichtimpulse, die benachbarte Paletten 2 und/oder Gitterboxen reflektieren, ignoriert werden.

Grundsätzlich wäre es auch denkbar, dass die Hinderniserkennungseinrichtung 6 dazu ausgebildet ist, um während des Befahrens der freien Abstellfläche 5, zumindest bis zum Abstellen der aufgenommenen Palette 2 und/oder der aufgenommenen Gitterbox auf der freien Abstellfläche 5, kein Hinderniserkennungssignal auszugeben.

Es wäre auch denkbar, dass die Datenverarbeitungseinheit dazu ausgebildet ist, um während des Befahrens der freien Abstellfläche 5, zumindest bis zum Abstellen der Palette 2 und/oder der Gitterbox auf der freien Abstellfläche 5, ein Hinderniserkennungssignal der Hinderniserkennungseinrichtung 6 zu ignorieren. Vorzugsweise ist die Hinderniserkennungseinrichtung 6 mit der Datenverarbeitungseinheit verbunden. Dies kann über eine elektrische oder eine optische Verbindung erfolgen. Auch eine drahtlose Verbindung wäre denkbar. Die Datenverarbeitungseinheit, welche Teil der Steuervorrichtung ist, ist bevorzugt dazu ausgebildet, um der Hinderniserkennungseinrichtung 6 mitzuteilen, dass diese das Überwachungsfeld 8 der ersten Sensoreinheit 7a entsprechend deaktivieren bzw. dass diese kein Hinderniserkennungssignal ausgeben soll. Die Datenverarbeitungseinheit könnte ein solches Hinderniserkennungssignal im Abstellbetriebsmodus auch einfach ignorieren.

Vorzugsweise ist die Datenverarbeitungseinheit dazu ausgebildet, um die Hinderniserkennungseinrichtung 6 derart anzusteuern, dass entweder die erste Sensoreinheit 7a oder die zweite Sensoreinheit 7b aktiviert ist (ein Überwachungsfeld 8 erzeugt), welche in Fahrtrichtung vorne am Stapler 1 angeordnet ist. Fährt der Stapler 1 vorwärts, so ist die zweite Sensoreinheit 7b aktiviert. Fährt der Stapler 1 rückwärts, so ist die erste Sensoreinheit 7a aktiviert. Die jeweils andere Sensoreinheit 7a bzw. 7b ist dann bevorzugt deaktiviert bzw. entsprechende Hinderniserkennungssignale führen zu keiner Auslösereaktion.

In den Figuren 2A, 2B, 2C ist dargestellt, wo die erste Sensoreinheit 7a und die zweite Sensoreinheit 7b am Stapler 1 angebracht sein können. In den Figuren 2A, 2B ist die erste Sensoreinheit 7a an einem unteren Bereich des Staplers 1 angeordnet. Die Steuervorrichtung ist dazu ausgebildet, um die Aufnahmevorrichtung derart anzusteuern, dass diese die aufgenommene Palette 2 und/oder die aufgenommene Gitterbox anhebt, sodass sich das Überwachungsfeld 8 der ersten Sensoreinheit 7a unterhalb der aufgenommenen Palette 2 und/oder unterhalb der aufgenommenen Gitterbox hindurch in Richtung der freien Abstellfläche 5 erstreckt. Dadurch wird zuverlässig vermieden, dass mit Gütern 4 beladene Paletten 2 bzw. Gitterboxen das Überwachungsfeld 8 verdecken. Die erste Sensoreinheit 7a könnte zusätzlich vom Unterboden des Staplers 1 in Richtung des Bodens (Fahrbahn) beabstandet angeordnet sein, sodass die Aufnahmevorrichtung die aufgenommene Palette und/oder die aufgenommene Gitterbox nur minimal (vorzugsweise weniger als 50 cm, 40 cm, 30 cm oder weniger als 20 cm) anheben muss.

Das Überwachungsfeld 8 der zweiten Sensoreinheit 7b wird dagegen nicht von einer Aufnahmevorrichtung und der durch die Aufnahmevorrichtung aufgenommenen Palette 2 und/oder Gitterbox verdeckt. Grundsätzlich wäre es denkbar, dass die erste Sensoreinheit 7a näher in Richtung des Bodens angeordnet ist als die zweite Sensoreinheit 7b.

**In** Figur 2C ist dargestellt, dass die erste Sensoreinheit 6a an einem Ende zumindest einer Gabel 3 angeordnet ist. Auch durch diese Maßnahme ist sichergestellt, dass das Überwachungsfeld 8 nicht durch die aufgenommene Palette 2 und/oder die aufgenommene Gitterbox verdeckt wird.

Figur 3 beschreibt ein Verfahren zum Betrieb des autonom fahrenden Staplers 1. In einem ersten Verfahrensschritt S₁ wird ein Überwachungsfeld 8 durch die erste Sensoreinheit 7a erzeugt, um mit diesem Überwachungsfeld 8 die freie Abstellfläche 5 für die abzustellende Palette 2 und/oder die abzustellende Gitterbox zwischen anderen Paletten 2 und/oder Gitterboxen auf Hindernisse hin zu untersuchen.

Im zweiten Verfahrensschritt S₂ wird die Antriebseinheit durch die Steuervorrichtung derart angesteuert, dass der Stapler 1, bei einem fehlenden (nicht detektierten) Hindernis, einen Abstellbetriebsmodus einnimmt und die aufgenommene Palette 2 und/oder die aufgenommene Gitterbox zum Abstellen in die freie Abstellfläche 5 fährt.

Im dritten Verfahrensschritt S₃ wird das Überwachungsfeld 8 der ersten Sensoreinheit 7a deaktiviert. Alternativ dazu wird unterbunden, dass durch die erste Sensoreinheit 7a oder die Hinderniserkennungseinrichtung 6 ein Hinderniserkennungssignal ausgegeben wird bzw. ein ausgegebenes Hinderniserkennungssignal wird (insbesondere durch die Datenverarbeitungseinheit) ignoriert. Der dritte Verfahrensschritt S₃ wird insbesondere so lange ausgeführt, solange sich der Stapler im Abstellbetriebsmodus befindet. Hat der Stapler 1 die aufgenommene Palette 2 und/oder die aufgenommene Gitterbox abgesetzt, so fährt er aus der freien Abstellfläche 5 heraus. In diesem Fall ist zumindest die zweite Sensoreinheit 7b aktiviert. Ergänzend kann auch die erste Sensoreinheit 7a wieder aktiviert werden bzw. entsprechende Hinderniserkennungssignale der ersten Sensoreinheit 7a führen wieder zu einer Auslösereaktion.

Im zweiten und dritten Verfahrensschritt S₂, S₃ überwacht die Steuervorrichtung anhand eines Signals der Gebereinheit und/oder eines anderweitigen Positionssignals, dass die maximal gefahrene Distanz kleiner oder gleich der Tiefe der zuvor freigemessenen Fläche ist, d.h. der Stapler 1 nicht über die freigemessene Fläche (d.h. die freie Abstellfläche 5) hinausfährt.

Grundsätzlich wäre es denkbar, dass die Datenverarbeitungseinheit ein Teil der Steuervorrichtung und/oder ein Teil der Hinderniserkennungseinrichtung 6 ist.

Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

**Bezugszeichenliste**

| | |
|---|---|
| Autonom fahrender Stapler | 1 |
| Palette | 2 |
| Gabeln | 3 |
| Güter | 4 |
| Freie Abstellfläche | 5 |
| Hinderniserkennungseinrichtung | 6 |
| Erste Sensoreinheit | 7a |
| Zweite Sensoreinheit | 7b |
| Überwachungsfeld | 8 |
| Verfahrensschritte | S₁, S₂, S₃ |

## Patentansprüche

1. Autonom fahrendes Transportsystem (1) zum Transport von Paletten (2) und/oder Gitterboxen, wobei das Transportsystem (1) eine Aufnahmevorrichtung zur Aufnahme der Palette (2) und/oder Gitterbox umfasst,
wobei das Transportsystem (1) eine Antriebseinheit und eine Steuervorrichtung umfasst, wobei die Steuervorrichtung eine Datenverarbeitungseinheit und eine Hinderniserkennungseinrichtung (6) mit einer ersten Sensoreinheit (7a) umfasst,
wobei die erste Sensoreinheit (7a) dazu ausgebildet ist, um ein Überwachungsfeld (8) zu erzeugen, um eine freie Abstellfläche (5) für die Palette (2) und/oder Gitterbox zwischen anderen Paletten (2) und/oder Gitterboxen auf Hindernisse hin zu untersuchen,
wobei die Steuervorrichtung dazu ausgebildet ist, um die Antriebseinheit derart anzusteuern, dass das Transportsystem (1), bei einem fehlenden Hindernis, einen Abstellbetriebsmodus einnimmt und die Palette (2) und/oder Gitterbox zum Abstellen in die freie Abstellfläche (5) fährt,
**dadurch gekennzeichnet, dass**
in dem Abstellbetriebsmodus:
a) die Hinderniserkennungseinrichtung (6) dazu ausgebildet ist, um während des Befahrens der freien Abstellfläche (5), zumindest bis zum Abstellen der Palette (2) und/oder Gitterbox auf der freien Abstellfläche (5), das Überwachungsfeld (8) zu deaktivieren oder kein Hinderniserkennungssignal auszugeben; oder
b) die Datenverarbeitungseinheit dazu ausgebildet ist, um während des Befahrens der freien Abstellfläche (5), zumindest bis zum Abstellen der Palette (2) und/oder Gitterbox auf der freien Abstellfläche (5), ein Hinderniserkennungssignal der Hinderniserkennungseinrichtung (6) zu ignorieren.

2. Autonom fahrendes Transportsystem (1) nach Anspruch 1,
wobei die Steuervorrichtung dazu ausgebildet ist, um die Antriebseinheit derart anzusteuern, dass das Transportsystem (1) im Abstellbetriebsmodus nur auf dem freigemessenen Bereich der Abstellfläche (5) fährt.

3. Autonom fahrendes Transportsystem (1) nach einem der vorstehenden Ansprüche,
wobei die erste Sensoreinheit (7a) einen optischen Sensor, einen akustischen Sensor oder einen elektromagnetischen Sensor umfasst.

4. Autonom fahrendes Transportsystem (1) nach Anspruch 3,
wobei der optische Sensor ein ToF-Sensor und/oder ein Laserscanner ist.

5. Autonom fahrendes Transportsystem (1) nach einem der vorstehenden Ansprüche,
wobei die Aufnahmevorrichtung Gabeln (3) umfasst und wobei die erste Sensoreinheit (7a) an einem Ende zumindest einer Gabel (3) angeordnet ist.

6. Autonom fahrendes Transportsystem (1) nach einem der Ansprüche 1 bis 4,
wobei die erste Sensoreinheit (7a) an einem unteren Bereich des Transportsystems (1) angeordnet ist, wobei die Steuervorrichtung dazu ausgebildet ist, um die Aufnahmevorrichtung derart anzusteuern, dass diese die Palette (2) und/oder Gitterbox anhebt, sodass sich das Überwachungsfeld (8) der ersten Sensoreinheit (7a) unterhalb der Palette (2) und/oder Gitterbox hindurch in Richtung der freien Abstellfläche (5) erstreckt, um diese auf Hindernisse hin zu untersuchen.

7. Autonom fahrendes Transportsystem (1) nach einem der vorstehenden Ansprüche,
wobei die Hinderniserkennungseinrichtung (6) eine zweite Sensoreinheit (7b) umfasst, wobei die erste Sensoreinheit (7a) rückseitig am Transportsystem (1) und die zweite Sensoreinheit (7b) frontseitig am Transportsystem (1) angeordnet ist.

8. Autonom fahrendes Transportsystem (1) nach Anspruch 7,
wobei die Steuervorrichtung dazu ausgebildet, um die Geschwindigkeit, mit welcher das Transportsystem (1) die freie Abstellfläche (5) befährt, gegenüber einer Geschwindigkeit, mit welcher das Transportsystem (5) bewegt wird, wenn die zweite Sensoreinheit (7b) in Bewegungsrichtung des Transportsystems (1) vorne angeordnet ist, zu reduzieren.

9. Autonom fahrendes Transportsystem (1) nach einem der vorstehenden Ansprüche,
wobei die Antriebseinheit eine elektrische Antriebseinheit ist und wobei die Steuervorrichtung im Abstellbetriebsmodus dazu ausgebildet ist, um die Stromaufnahme der Antriebseinheit zu überwachen, wobei für den Fall, dass die Stromaufnahme der Antriebseinheit einen Schwellwert überschreitet die Steuervorrichtung die Antriebseinheit derart ansteuert, dass diese das Transportsystem (1) stoppt oder aus der freien Abstellfläche (5) herausfährt.

10. Verfahren zum Betrieb eines autonom fahrenden Transportsystems (1) zum Transport von Paletten (2) und/oder Gitterboxen, mit den folgenden Verfahrensschritten:
- Erzeugen eines Überwachungsfeldes (8), um eine freie Abstellfläche (5) für eine abzustellende Palette (2) und/oder Gitterbox zwischen anderen Paletten (2) und/oder Gitterboxen auf Hindernisse hin zu untersuchen,
- Ansteuern einer Antriebseinheit, so dass das Transportsystem (1), bei einem fehlenden Hindernis, einen Abstellbetriebsmodus einnimmt und die Palette (2) und/oder Gitterbox zum Abstellen in die freie Abstellfläche (5) fährt;
- Deaktivieren des Überwachungsfeldes (8) oder Unterbinden, dass ein Hinderniserkennungssignal ausgegeben wird oder Ignorieren eines Hinderniserkennungssignals solange sich das Transportsystem (1) im Abstellbetriebsmodus befindet.

## Claims

1. An autonomously moving transport system (1) for transporting pallets (2) and/or pallet cages, wherein the transport system (1) comprises a pick-up apparatus for picking up the pallet (2) and/or the pallet cage,
wherein the transport system (1) comprises a drive unit and a control apparatus, wherein the control apparatus comprises a data processing unit and an obstacle recognition device (6) having a first sensor unit (7a),
wherein the first sensor unit (7a) is configured to generate a monitored field (8) in order to examine a free placement area (5) for the pallet (2) and/or the pallet cage between other pallets (2) and/or pallet cages for obstacles,
wherein the control apparatus is configured to control the drive unit such that the transport system (1), in the absence of an obstacle, adopts a placement operating mode and moves the pallet (2) and/or the pallet cage into the free placement area (5) for placement,
**characterized in that**
in the placement operating mode:
a) the obstacle recognition device (6) is configured to deactivate the monitored field (8) or not to output an obstacle recognition signal during the travel over the free placement area (5), at least until the placement of the pallet (2) and/or the pallet cage on the free placement area (5); or
b) the data processing unit is configured to ignore an obstacle recognition signal of the obstacle recognition device (6) during the travel over the free placement area (5), at least until the placement of the pallet (2) and/or the pallet cage on the free placement area (5).

2. An autonomously moving transport system (1) according to claim 1,
wherein the control apparatus is configured to control the drive unit such that the transport system (1) only travels on the cleared region of the placement area (5) in the placement operating mode.

3. An autonomously moving transport system (1) according to one of the preceding claims,
wherein the first sensor unit (7a) comprises an optical sensor, an acoustic sensor, or an electromagnetic sensor.

4. An autonomously moving transport system (1) according to claim 3,
wherein the optical sensor is a ToF sensor and/or a laser scanner.

5. An autonomously moving transport system (1) according to any one of the preceding claims,
wherein the pick-up apparatus comprises forks (3) and wherein the first sensor unit (7a) is arranged at one end of at least one fork (3).

6. An autonomously moving transport system (1) according to any one of the claims 1 to 4,
wherein the first sensor unit (7a) is arranged at a lower region of the transport system (1), wherein the control apparatus is configured to control the pick-up apparatus such that the latter raises the pallet (2) and/or the pallet cage so that the monitored field (8) of the first sensor unit (7a) extends below the pallet (2) and/or the pallet cage in the direction of the free placement area (5) in order to examine the latter for obstacles.

7. An autonomously moving transport system (1) according to any one of the preceding claims,
wherein the obstacle recognition device (6) comprises a second sensor unit (7b), wherein the first sensor unit (7a) is arranged at the rear side of the transport system (1) and the second sensor unit (7b) is arranged at the front side of the transport system (1).

8. An autonomously moving transport system (1) according to claim 7,
wherein the control apparatus is configured to reduce the speed at which the transport system (1) travels over the free placement area (5) compared to a speed at which the transport system (5) is moved when the second sensor unit (7b) is arranged at the front in the direction of movement of the transport system (1).

9. An autonomously moving transport system (1) according to any one of the preceding claims,
wherein the drive unit is an electrical drive unit and wherein the control apparatus is configured in the placement operating mode to monitor the power consumption of the drive unit, wherein, in the event that the power consumption of the drive unit exceeds a threshold value, the control apparatus controls the drive unit such that the latter stops the transport system (1) or moves the transport system (1) out of the free placement area (5).

10. A method of operating an autonomously moving transport system (1) for transporting pallets (2) and/or pallet cages, comprising the following method steps:
- generating a monitored field (8) to examine a free placement area (5) for a pallet (2) and/or pallet cage to be placed between other pallets (2) and/or pallet cages for obstacles,
- controlling a drive unit so that the transport system (1), in the absence of an obstacle, adopts a placement operating mode and moves the pallet (2) and/or the pallet cage into the free placement area (5) for placement;
- deactivating the monitored field (8) or preventing an obstacle recognition signal from being output or ignoring an obstacle recognition signal as long as the transport system (1) is in the placement operating mode.

## Revendications

1. Système de transport à déplacement autonome (1) pour le transport de palettes (2) et/ou de caisses à claire-voie, le système de transport (1) comprenant un dispositif de réception destiné à recevoir la palette (2) et/ou la caisse à claire-voie, le système de transport (1) comprenant une unité d'entraînement et un dispositif de commande, le dispositif de commande comprenant une unité de traitement de données et un moyen de détection d'obstacles (6) avec une première unité de détection (7a),
dans lequel la première unité de détection (7a) est conçue pour générer un champ de surveillance (8) pour examiner une surface de rangement libre (5) pour la palette (2) et/ou la caisse à claire-voie entre d'autres palettes (2) et/ou caisses à claire-voie quant à la présence d'obstacles,
dans lequel le dispositif de commande est conçu pour commander l'unité d'entraînement de telle sorte que le système de transport (1), en cas d'absence d'obstacle, adopte un mode de rangement et déplace la palette (2) et/ou la caisse à claire-voie pour la ranger dans la surface de rangement libre (5),
**caractérisé en ce que** dans le mode de rangement :
a) le moyen de détection d'obstacles (6) est conçu pour désactiver le champ de surveillance (8) ou ne pas émettre de signal de détection d'obstacles pendant la circulation sur la surface de rangement libre (5), au moins jusqu'au rangement de la palette (2) et/ou de la caisse à claire-voie sur la surface de rangement libre (5) ; ou
b) l'unité de traitement de données est conçue pour ignorer un signal de détection d'obstacle du moyen de détection d'obstacles (6) pendant la circulation sur la surface de rangement libre (5), au moins jusqu'au rangement de la palette (2) et/ou de la caisse à claire-voie sur la surface de rangement libre (5).

2. Système de transport à déplacement autonome (1) selon la revendication 1,
dans lequel le dispositif de commande est conçu pour commander l'unité d'entraînement de telle sorte que le système de transport (1) en mode de rangement ne se déplace que sur la zone détectée libre de la surface de rangement (5).

3. Système de transport à déplacement autonome (1) selon l'une des revendications précédentes,
dans lequel la première unité de détection (7a) comprend un capteur optique, un capteur acoustique ou un capteur électromagnétique.

4. Système de transport à déplacement autonome (1) selon la revendication 3,
dans lequel le capteur optique est un capteur ToF et/ou un scanner laser.

5. Système de transport à déplacement autonome (1) selon l'une des revendications précédentes,
dans lequel le dispositif de réception comprend des fourches (3) et dans lequel la première unité de détection (7a) est disposée à une extrémité d'au moins une fourche (3).

6. Système de transport à déplacement autonome (1) selon l'une des revendications 1 à 4,
dans lequel la première unité de détection (7a) est disposée dans une zone inférieure du système de transport (1), le dispositif de commande étant conçu pour commander le dispositif de réception de telle sorte que celui-ci soulève la palette (2) et/ou la caisse à claire-voie, de sorte que le champ de surveillance (8) de la première unité de détection (7a) s'étend en dessous de la palette (2) et/ou de la caisse à claire-voie en direction de la surface de rangement libre (5) afin d'examiner celle-ci quant à la présence d'obstacles.

7. Système de transport à déplacement autonome (1) selon l'une des revendications précédentes,
dans lequel le moyen de détection d'obstacles (6) comprend une deuxième unité de détection (7b), la première unité de détection (7a) étant disposée à l'arrière du système de transport (1) et la deuxième unité de détection (7b) à l'avant du système de transport (1).

8. Système de transport à déplacement autonome (1) selon la revendication 7,
dans lequel le dispositif de commande est conçu pour réduire la vitesse à laquelle le système de transport (1) circule sur la surface de rangement libre (5) par rapport à une vitesse à laquelle le système de transport (5) est déplacé lorsque la deuxième unité de détection (7b) est disposée à l'avant dans le sens de déplacement du système de transport (1).

9. Système de transport à déplacement autonome (1) selon l'une des revendications précédentes,
dans lequel l'unité d'entraînement est une unité d'entraînement électrique et dans lequel le dispositif de commande est conçu, en mode de rangement, pour surveiller la consommation de courant de l'unité d'entraînement, dans lequel, dans le cas où la consommation de courant de l'unité d'entraînement dépasse une valeur seuil, le dispositif de commande commande l'unité d'entraînement de telle sorte que celle-ci arrête le système de transport (1) ou le déplace en dehors de la surface de rangement libre (5).

10. Procédé de fonctionnement d'un système de transport à déplacement autonome (1) pour le transport de palettes (2) et/ou de caisses à claire-voie, comprenant les étapes consistant à :
- générer un champ de surveillance (8) pour examiner une surface de rangement libre (5) pour une palette (2) et/ou une caisse à claire-voie à ranger entre d'autres palettes (2) et/ou caisses à claire-voie quant à la présence d'obstacles,
- commander une unité d'entraînement de telle sorte que le système de transport (1), en l'absence d'obstacle, adopte un mode de rangement et déplace la palette (2) et/ou la caisse à claire-voie pour la ranger dans la surface de rangement libre (5) ;
- désactiver le champ de surveillance (8) ou empêcher qu'un signal de détection d'obstacle soit émis ou ignorer un signal de détection d'obstacle tant que le système de transport (1) se trouve en mode de rangement.
